# EUROPEAN PATENT APPLICATION

(11) **EP 1 598 225 A2**
(43) Date of publication of application: **23.11.2005**
(21) Application number: 05010739.0
(22) Date of filing: 18.05.2005
(51) Int. Cl.: B60H 1/32

(54) **Energy efficient capacity control for an air conditioning system**

(30) Priority: 18.05.2004 US 572654 P
(71) Applicant: Modine Manufacturing Company, Racine Wisconsin 53403 (US)
(72) Inventor: Martin, George, Lancaster, KY 40444 (US); Galloway, Carol S., Lawrenceburg, KY 40342 (US)
(74) Representative: Heselberger, Johannes

(57) **Abstract**

An air conditioning system (10) is provided for cooling a compartment (16) of a truck when the main engine is not running. The system (10) includes a variable speed compressor (20), a variable speed condenser fan (22), a variable speed evaporator blower (24), and a controller (14) configured to optimize the cooling capacity of the system (10) to the cooling requirements of the compartment (16) by selectively adjusting the speeds of the variable speed components (20, 22, 24).

## Description

### CROSS-REFERENCE TO RELATED APPLICATION

This application claims priority to provisional application Serial No. 60/572,654, filed May 18, 2004, entitled "Energy Efficient Capacity Control for an Air Conditioning System".

### FIELD OF THE INVENTION

The invention relates to vehicle air conditioning systems, and in more particular applications to air conditioning systems for the sleeper cabs or compartments of large trucks.

### BACKGROUND OF THE INVENTION

Currently, air conditioning systems for vehicles, and particularly for the sleeper cabs of large trucks, is provided via an engine driven air conditioning system. However, concern over pollution, both air and noise, is creating the potential that trucks will no longer be allowed in some instances to idle their engines in order to operate the air conditioning for the sleeper cab. In addition to concerns over pollution, it has been estimated that the costs for overnight idling include $2,400 per year in fuel consumption and $250 per year in added maintenance. With respect to air pollution, it has been estimated that a single truck idling for one year produces 250 lbs. of CO, 615 lbs. of NOₓ, and 17 tons of CO₂.

Possible alternatives to having the main engine idle include: auxiliary power units wherein a diesel engine rotates an automotive style AC compressor and an alternator DC/AC, and that interfaces with existing cab air handling and existing vehicle heating, venting and air conditioning (HVAC) cooling system; a generator set (GENSET) wherein a diesel engine powers a generator providing AC electric for use in a vehicle; 120 AC electricity, shore power wherein the truck stop provides electrical outlets; and auxiliary batteries wherein additional batteries are added for the vehicle for use by a sleeper HVAC system.

Electrically driven, hermetic vapor compression air conditioning (A/C) systems are common but there are few used in vehicles. The main reason for not using this reliable means of providing air conditioning is the lack of available electric power. U.S. Patent No. 6,622,500 describes a vapor compression A/C system that attempts to improve efficiency by controlling a variable displacement compressor.

### SUMMARY OF THE INVENTION

In accordance with one feature of the invention, a method if provided for operating a vapor compression air conditioning system for a sleeper compartment of a truck, the air conditioning system including a variable speed compressor for pressurizing a refrigerant, a condenser, an evaporator, and a variable speed blower for directing an air flow through the evaporator. The method includes the steps of:
a) monitoring the air temperature of the sleeper compartment;
b) monitoring the air flow temperature out of the evaporator;
c) monitoring the refrigerant discharge pressure of the compressor;
d) monitoring the sub-cooling of the refrigerant;
e) adjusting the speed of the compressor based on the monitoring of steps a), b) and c); and
f) adjusting the speed of the blower based on the monitoring of step d).

As one feature, step e) includes adjusting a voltage to the variable speed compressor.

In one feature, step f) includes adjusting a voltage to the variable speed blower.

According to one feature, step e) includes comparing the air temperature out of the evaporator to a dew point.

In one feature, step e) includes comparing the sleeper compartment temperature to a set temperature. In a further feature, step e) further includes comparing the air temperature out of the evaporator to the set temperature. In yet a further feature, step e) further includes comparing the air temperature out of the evaporator to a dew point.

As one feature, step f) includes comparing the sub-cooling of the refrigerant to a check value.

According to one feature, the step e) includes comparing the discharge pressure to a check value.

In one feature, the method further includes:
g) monitoring the super heat of the refrigerant;
h) adjusting the speed of a condenser fan based on the monitoring of step g).

In accordance with one feature of the invention, an air conditioning system is provided for use in cooling a sleeper compartment of a truck. The system includes a refrigerant flow path; a variable speed compressor to pressurize a refrigerant in the refrigerant flow path; a condenser in the refrigerant flow path downstream from the compressor; an evaporator in the refrigerant flow path downstream from the condenser; a variable speed blower configured to direct an air flow through the evaporator to cool the sleeper compartment; a plurality of sensors to monitor the air temperature of the sleeper compartment, the temperature of the air flow out of the evaporator, the refrigerant discharge pressure of the compressor; and the sub-cooling of the refrigerant in the refrigerant flow path; and a controller connected to the sensors and the compressor and blower, the controller configured to selectively adjust the speed of the compressor and the blower based on signals received from the plurality of sensors.

As one feature, the controller is configured to adjust the speed of the compressor based on a signal indicating the air temperature of the sleeper compartment.

In one feature, the controller is configured to adjust the speed of the compressor based on a signal indicating the temperature of the air flow exiting the evaporator.

According to one feature, the controller is configured to adjust the speed of the compressor based on a signal indicating the discharge pressure of the compressor.

In accordance with one feature, the controller is configured to adjust the speed of the compressor based on a signals indicating the air temperature of the sleeper compartment, the temperature of the air flow exiting the evaporator, and the discharge pressure of the compressor.

In one feature, the controller is configured to adjust the speed of the blower based on a signal that indicates the sub-cooling of the refrigerant.

In one feature, the system further includes a variable speed condenser fan configured to direct an air flow through the condenser, and the controller is configured to adjust the speed of the fan based on a signal indicating the super heat of the refrigerant.

In accordance with one feature of the invention, a method if provided for operating a vapor compression air conditioning system for a sleeper compartment of a truck, the air conditioning system including a variable speed compressor for pressurizing a refrigerant, a condenser, an evaporator, and a variable speed blower for directing an air flow through the evaporator. The method includes the steps of:
a) adjusting the speed of the compressor based on the temperature of the air flow out of the evaporator and the refrigerant discharge pressure out of the compressor; and
b) adjusting the speed of the blower based on the sub-cooling of the refrigerant.

As one feature, step a) further includes adjusting the speed of the compressor based on the air temperature in the sleeper compartment.

In one feature, the method further includes the step of adjusting the speed of a variable speed condenser fan based on the super heat of the refrigerant.

In accordance with one feature of the invention, an air conditioning system is provided for use in cooling a sleeper compartment of a truck. The system includes a refrigerant flow path; a variable speed compressor to pressurize a refrigerant in the refrigerant flow path; a condenser in the refrigerant flow path downstream from the compressor; an evaporator in the refrigerant flow path downstream from the condenser; a variable speed blower configured to direct an air flow through the evaporator to cool the sleeper compartment; and a controller configured to selectively adjust the speed of the compressor and the blower based on signals indicating the temperature of the air flow out of the evaporator, the refrigerant discharge pressure out of the compressor, and the sub-cooling of the refrigerant.

In one feature, the system of further includes a variable speed fan configured to direct an air flow through the condenser, and wherein the controller is configured to adjust the speed of the fan based on a signal indicating the super heat of the refrigerant.

Other objects, features, and advantages of the invention will become apparent from a review of the entire specification, including the appended claims and drawings.

### BRIEF DESCRIPTION OF THE DRAWINGS

Fig. 1 is a diagrammatic representation of an air conditioning system embodying the present invention for use in cooling a sleeper cab or compartment of a truck;
Fig. 2 is an electrical control schematic for the system of Fig. 1;
Fig. 3 is a graph illustrating the non-idling cooling requirements of a sleeper compartment of a truck in which the system of Fig. 1 can be used;
Fig. 4 is a control algorithm for the system of Fig. 1;
Fig. 5 is a side elevation view of a truck in which the system of Fig. 1 can be used;
Fig. 6 is a graph showing certain temperatures associated with the truck of Fig. 5 during certain non-idle conditions;
Fig. 7 is a table showing the weights of a test system built according to the invention;
Fig. 8 is a graph showing the test results of a test system embodying the present invention;
Figs. 9 and 10 are graphs of input watts and cooling watts versus condenser ambient for a system embodying the present invention;
Fig. 11 is a graph showing cooling capacity versus compression ratio for a system embodying the present invention; and
Fig. 12 is a table comparing certain system parameters of a system embodying the present invention.

### DETAILED DESCRIPTION OF THE PREFERRED EMBODIMENT

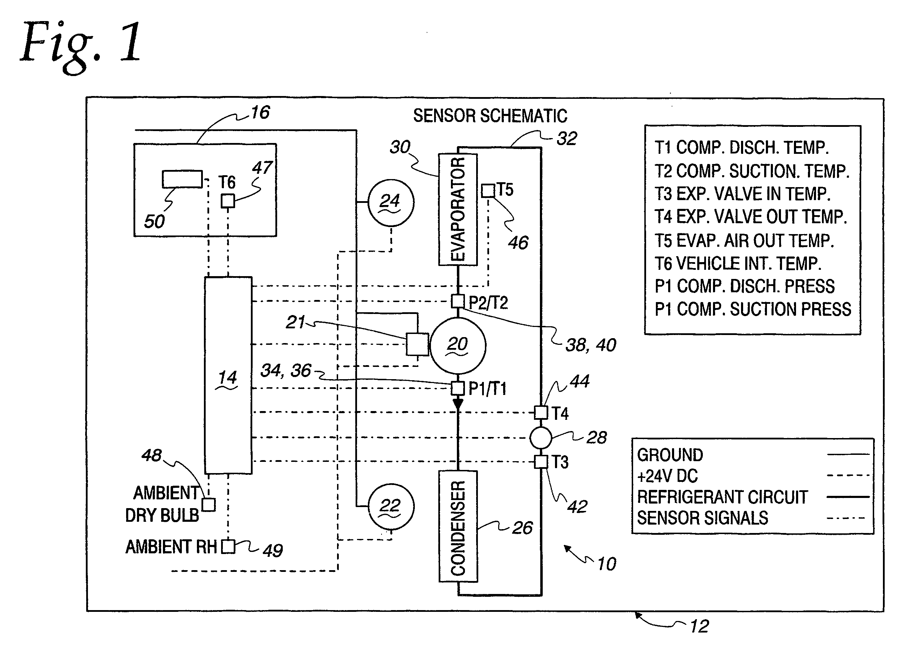

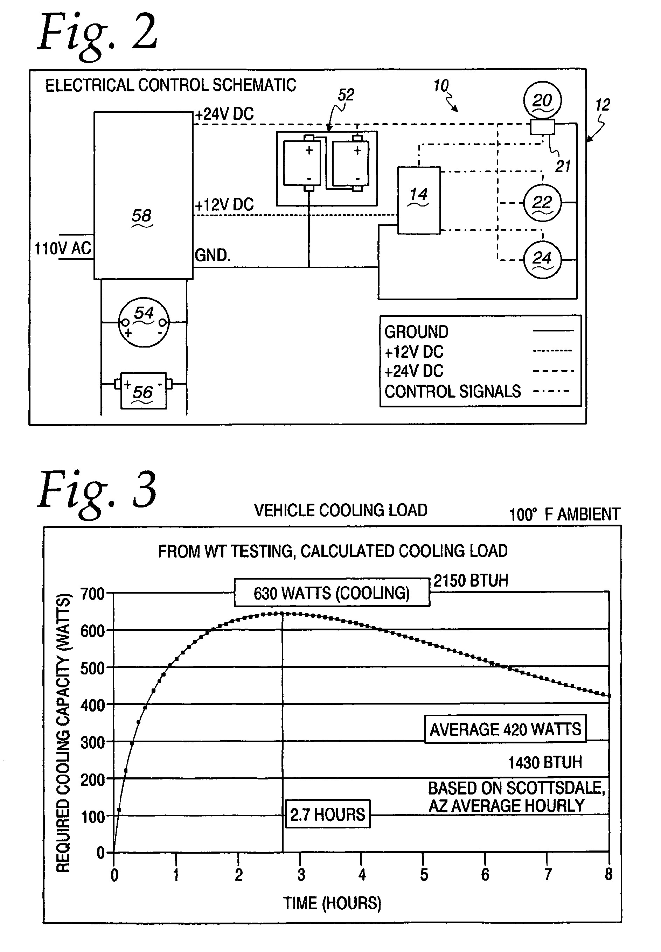

With reference to Figs. 1 and 2, the invention provides an electrically driven, hermetic, vapor compression A/C system 10 that will maintain comfortable temperatures in a vehicle, shown schematically at 12, without operating the main engine by utilizing an electronic control scheme or controller 14 that efficiently matches the cooling output to the cooling requirements.

Wind tunnel tests were run on a typical class H sleeper cab 16 and some additional computer calculations were done to determine the cooling requirements for the cab 16. The results are shown in Fig. 3 of this application. Preferably, the system 10 according to the invention matches or attempts to match the cooling requirements exactly in order to operate the A/C system 10 in the most efficient manner.

This system 10 consists of selected air conditioning components and sensors that can be controlled to deliver cooling capacity as required while minimizing the power consumed. Preferably, the system 10 includes a compressor 20, a compressor controller 21, a condenser fan 22, and an evaporator blower 24, all of which are continuously variable speed. The system 10 further preferably includes a condenser 26, a pressure reduction device 28, such as an expansion valve, thermostatic expansion valve, orifice tube, and preferably an electronically controlled expansion valve 28, and an evaporator 30, all connected in series in a refrigerant flow path 32 with the compressor 20. The sensors used to determine the control operation are shown in Fig. 1, which shows sensors 34 and 36 for monitoring the compressor discharge temperature T1 and compressor discharge pressure P1, respectively, sensors 38 and 40 for monitoring the compressor suction temperature T2 and compressor suction pressure P2, respectively, sensor 42 for monitoring the expansion valve inlet temperature T3, sensor 44 for monitoring the expansion valve outlet temperature T4, sensor 46 for monitoring the evaporator air outlet temperature T5, and sensor 47 for monitoring the vehicle interior temperature T6, which is preferably the interior temperature of the sleeper compartment 16 of the vehicle 12. Sensors 48 and 49 are also included to monitor the ambient dry bulb and the ambient relative humidify, respectively. An operator control 50 is also provided and is connected to the controller 14, as are the previously described sensors. The controller 14 will preferably include a printed circuit board having a control algorithm which will be described later. Preferably, as seen in Fig. 2, the system 10 is powered by a battery pack 52 when in non-idle mode, and by a vehicle alternator 54, battery 56, and charger/converter 58 when in idle mode. Preferably, the charger/converter 58 converts 120 volt AC to 24 volt DC for unit and auxiliary battery charging.

With reference to Fig. 2, it can be seen that the system controller 14 preferably operates off of 12 volt DC, while the variable speed compressor 20, condenser fan 22, and evaporator blower 24 operate off of 24 volt DC. Further, while it has not been shown, an electronically controlled expansion valve 28 could be connected in the Electronic Control Schematic in the same fashion as the compressor 20, condenser fan 22, and evaporator blower 24.

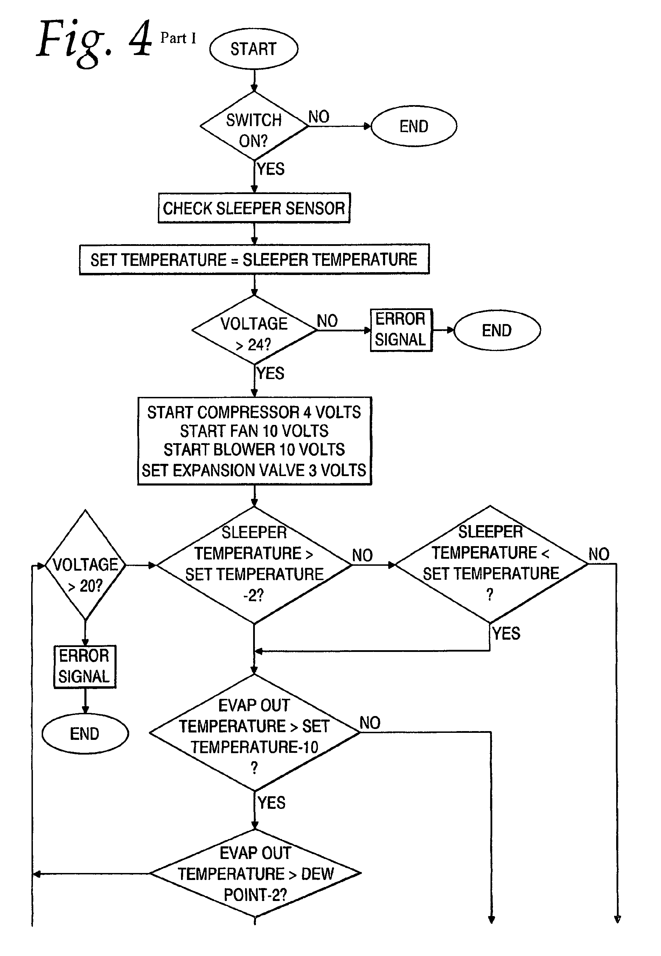

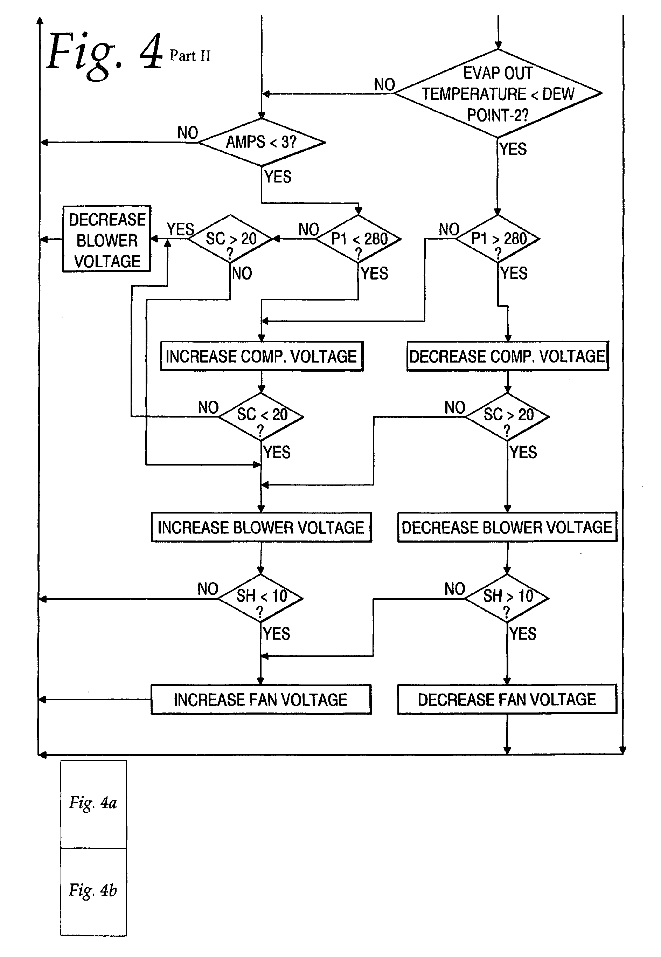

Fig. 4 shows a System Algorithm Diagram that is used by the electronic controller. It should be noted that the values of various checking parameters shown represent a current best guess for a particular system, but can easily be changed in order to optimize the system and control scheme for each particular application. Accordingly, it should be understood that the values for the adjustments to the Set temperatures for the Sleeper Temperature and for the Evaporator Out Temperature, the adjustment to the Dew Point for the Evaporator Out Temperature versus Dew Point comparison, the check pressure value for the compressor discharge pressure (P1), the check values for the subcooling (SC), and the check values for the superheat (SH) may all be adjusted to optimize each particular system dependent upon the particular components and parameters associated with each system.

As seen in Fig. 4, controller 14 is configured to adjust the speed of the compressor 20, the fan 22, and the blower 24 based on the air temperature in the sleeper compartment 16, the temperature of the air flow out of the evaporator 30, the discharge pressure P1 of the compressor 20, the subcooling of the refrigerant, and the superheat of the refrigerant. More specifically, it can be seen that the controller preferably adjusts the speed of the compressor 20, via an increase or decrease in the voltage to the compressor 20, based upon the sleeper temperature in comparison to a set temperature, the temperature of the air flow out of the evaporator 30 in comparison to the set temperature, the temperature of air flow out of the evaporator 30 in comparison to the dew point, and the discharge pressure P1 out of the compressor 20 in comparison to a check pressure. The controller 14 adjusts the speed of the blower 24, via an increase or decrease in the voltage to the blower 24, based upon the subcooling of the refrigerant in comparison to a check value, and adjusts the speed of the fan 22, via an increase or decrease in the voltage to the fan, based on the superheat of the refrigerant in comparison to a check value.

It should be understood that the control of certain system components appears to be more critical to the goal of minimizing power consumption. For example, the control of the compressor voltage appears to have the highest order effect on power consumption, followed by the control of the blower voltage, and then last by the control of the fan voltage. In this regard, it should be noted that in some systems it may be desirable to not control the lower order components, such as, for example, not to control the fan voltage. In such a case, the algorithm would be changed by simply eliminating the checks of the superheat (SH) and the associated commands to either increase or decrease the fan voltage.

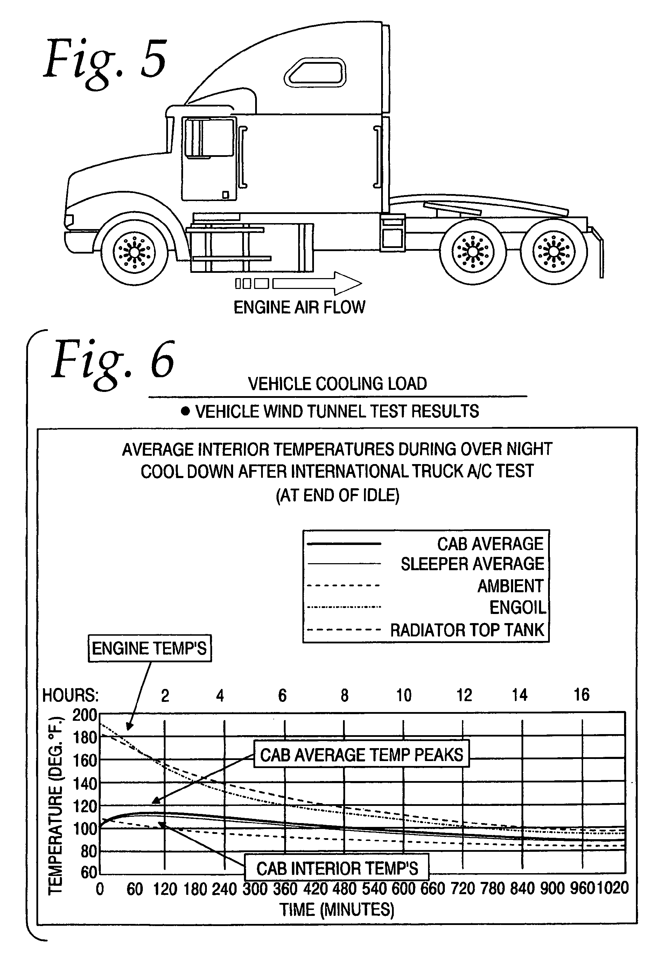

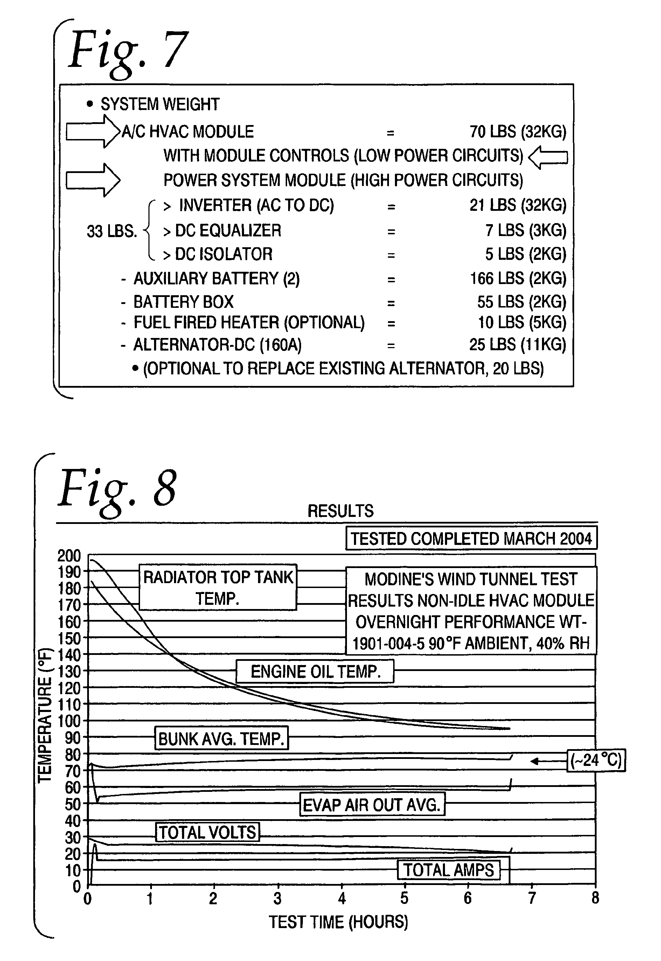

A system built and controlled according to the invention was installed in a test bed vehicle and performance tested in a wind tunnel. The test bed vehicle was a Class 8 heavy truck, as shown in Fig. 5, which included a cab width of 6.5 feet, a sleeper width of 7.9 feet, a front windshield area of 6.8 square feet, a sleeper window of 3.3 square feet, a sleeper body of 5.9 feet length by 6.5 foot width by 9.8 foot height with almost no insulation in the walls. The test unit included a compressor 20, a condenser fan 22, and an evaporator blower 24 that were continuously variable. A manually controlled expansion valve 28 was used rather than an electronically controlled expansion valve. The test system 10 was built as a module that was 24 inches wide by 24 inches high by 16 inches deep and was installed beneath the sleeper bed. The weights of the system components are shown in Fig. 7.

The vehicle cooling load requirements shown in Fig. 3 were generated, at least in part, from the wind tunnel testing of the test vehicle, the results of which are shown in Fig. 6 for overnight cool down after the end of engine idle. The peak in the cooling requirements is a result of the engine heat (represented by the engine oil temperature and radiator top tank temperature), which heats the interior of the cab and sleeper during the initial non-idle time period. The results of this testing were then built into a simulation computer model, which generated an accurate comparison between the simulation results and the test results.

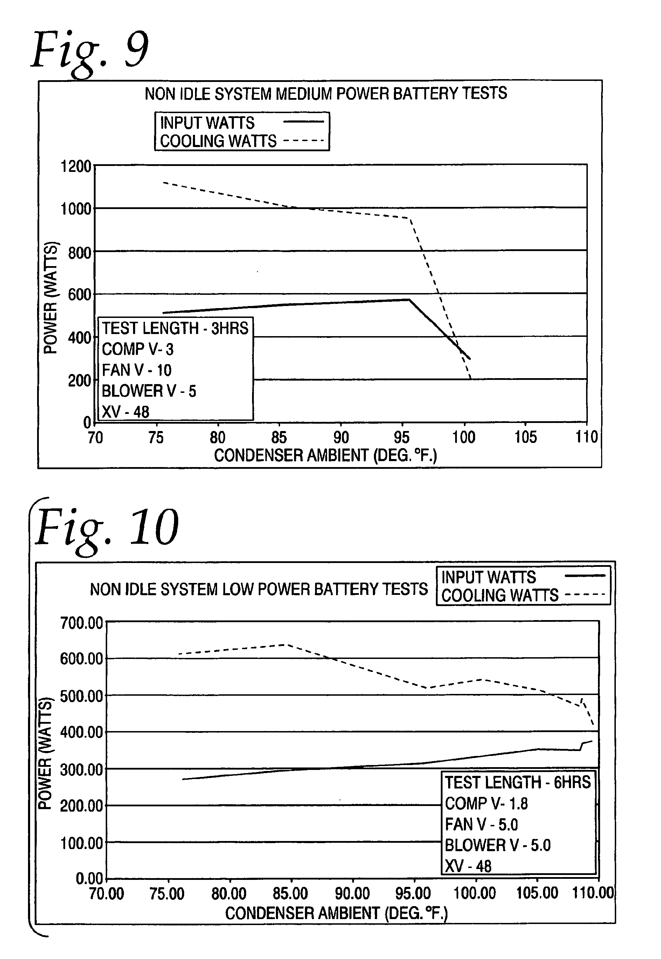

Preliminary testing indicated that the required cooling capacity could be generated with the minimum electrical input. The testing showed the ability to provide almost eight hours of maintaining the sleeper compartment at 21°C/70°F with a 32°C-90°F outside air ambient and required 2500 watts (electrical) over an eight hour period. A first generation unit at medium settings used two 12-volt DC 100 amp hour batteries - producing six hours (2000 watts electrical). A second generation unit at medium settings used two 12-volt DC 125 amp hour batteries producing almost eight hours of performance. Extended life can be achieved with additional batteries and potentially with refined control strategies and refrigerant components. Fig. 8 is a graph showing the test results of a non-idle HVAC module overnight at 90°F ambient and 40% relative humidity.

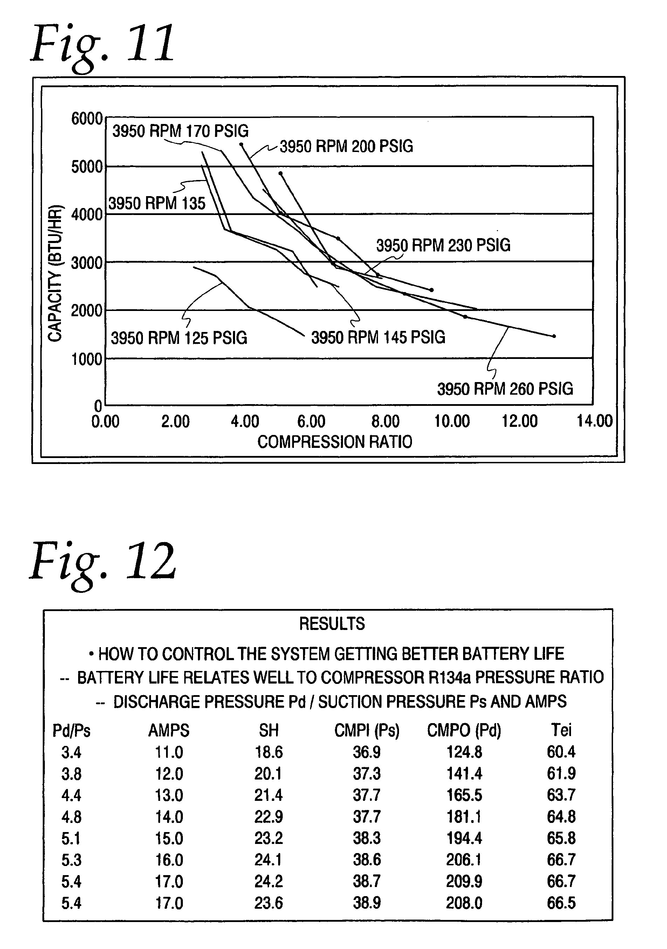

Figs. 9 and 10 show the results from initial tests that were done to help determine the most efficient operating points for the system. Further in this regard, Fig. 11 shows the effect of compressor compression ratio on capacity, and Fig. 12 is a table that relates the pressure ratio to amps, superheat, the suction pressure of the compressor 20, and the discharge pressure of the compressor 20 and provides an indication of how to control the system 10 to get better battery life.

The results of the above and other tests indicate that with the infinitely variable compressor 20 and infinitely variable fan 22 and blower motors 24, a system 10 can be operated more efficiently than with current production components.

The advantages of this invention include the proper selection of controllable components, and the controls that efficiently match the system output to the requirements thereby minimizing power consumption.

## Claims

1. A method of operating a vapor compression air conditioning system for a sleeper compartment of a truck, the air conditioning system including a variable speed compressor for pressurizing a refrigerant, a condenser, an evaporator, and a variable speed blower for directing an air flow through the evaporator, the method comprising the steps of:
a) monitoring the air temperature of the sleeper compartment;
b) monitoring the air flow temperature out of the evaporator;
c) monitoring the refrigerant discharge pressure of the compressor;
d) monitoring the sub-cooling of the refrigerant;
e) adjusting the speed of the compressor based on the monitoring of steps a), b) and c); and
f) adjusting the speed of the blower based on the monitoring of step d).

2. The method of claim1 wherein step e) comprises adjusting a voltage to the variable speed compressor.

3. The method of claim 1 wherein step f) comprises adjusting a voltage to the variable speed blower.

4. The method of claim 1 wherein step e) comprises comparing the air temperature out of the evaporator to a dew point.

5. The method of claim 1 wherein step e) comprises comparing the sleeper compartment temperature to a set temperature.

6. The method of claim 5 wherein step e) comprises comparing the air temperature out of the evaporator to the set temperature.

7. The method of claim 6 wherein step e) further comprises comparing the air temperature out of the evaporator to a dew point.

8. The method of claim 1 wherein step f) comprises comparing the sub-cooling of the refrigerant to a check value.

9. The method of claim 1 wherein the step e) comprises comparing the discharge pressure to a check value.

10. The method of claim 1 further comprising:
g) monitoring the super heat of the refrigerant;
h) adjusting the speed of a condenser fan based on the monitoring of step g).

11. An air conditioning system for use in cooling a sleeper compartment of a truck, the system comprising:
a refrigerant flow path;
a variable speed compressor to pressurize a refrigerant in the refrigerant flow path;
a condenser in the refrigerant flow path downstream from the compressor;
an evaporator in the refrigerant flow path downstream from the condenser;
a variable speed blower configured to direct an air flow through the evaporator to cool the sleeper compartment;
a plurality of sensors to monitor the air temperature of the sleeper compartment, the temperature of the air flow out of the evaporator, the refrigerant discharge pressure of the compressor; and the sub-cooling of the refrigerant in the refrigerant flow path; and
a controller connected to the sensors and the compressor and blower, the controller configured to selectively adjust the speed of the compressor and the blower based on signals received from the plurality of sensors.

12. The system of claim 11 wherein the controller is configured to adjust the speed of the compressor based on a signal indicating the air temperature of the sleeper compartment.

13. The system of claim 11 wherein the controller is configured to adjust the speed of the compressor based on a signal indicating the temperature of the air flow exiting the evaporator.

14. The system of claim 11 wherein the controller is configured to adjust the speed of the compressor based on a signal indicating the discharge pressure of the compressor.

15. The system of claim 11 wherein the controller is configured to adjust the speed of the compressor based on a signals indicating the air temperature of the sleeper compartment, the temperature of the air flow exiting the evaporator, and the discharge pressure of the compressor.

16. The system of claim 11 wherein the controller is configured to adjust the speed of the blower based on a signal that indicates the sub-cooling of the refrigerant.

17. The system of claim 11 further comprising a variable speed condenser fan configured to direct an air flow through the condenser and wherein said controller is configured to adjust the speed of the fan based on a signal indicating the super heat of the refrigerant.

18. A method of operating a vapor compression air conditioning system for a sleeper compartment of a truck, the air conditioning system including a variable speed compressor for pressurizing a refrigerant, a condenser, an evaporator, and a variable speed blower for directing an air flow through the evaporator, the method comprising the steps of:
a) adjusting the speed of the compressor based on the temperature of the air flow out of the evaporator and on the refrigerant discharge pressure out of the compressor; and
b) adjusting the speed of the blower based on the sub-cooling of the refrigerant.

19. The method of claim 18 wherein step a) further comprises adjusting the speed of the compressor based on the air temperature in the sleeper compartment.

20. The method of claim 18 further comprising the step of adjusting the speed of a variable speed condenser fan based on the super heat of the refrigerant.

21. An air conditioning system for use in cooling a sleeper compartment of a truck, the system comprising:
a refrigerant flow path;
a variable speed compressor to pressurize a refrigerant in the refrigerant flow path;
a condenser in the refrigerant flow path downstream from the compressor;
an evaporator in the refrigerant flow path downstream from the condenser;
a variable speed blower configured to direct an air flow through the evaporator to cool the sleeper compartment; and
a controller configured to selectively adjust the speed of the compressor and the blower based on signals indicating the temperature of the air flow out of the evaporator, the refrigerant discharge pressure out of the compressor, and the sub-cooling of the refrigerant.

22. The system of claim 21 further comprising a variable speed fan configured to direct an air flow through the condenser, and wherein the controller is configured to adjust the speed of the fan based on a signal indicating the super heat of the refrigerant.
